Europäisches Patentamt

European Patent Office

Office européen des brevets

(19)

(11) **EP 0 541 562 B1**

(12) **EUROPÄISCHE PATENTSCHRIFT**

(45) Veröffentlichungstag und Bekanntmachung des Hinweises auf die Patenterteilung:
04.09.1996 Patentblatt 1996/36

(51) Int Cl.$^6$: **H04N 1/46**

(86) Internationale Anmeldenummer:
**PCT/DE91/00506**

(21) Anmeldenummer: 91910797.9

(22) Anmeldetag: 14.06.1991

(87) Internationale Veröffentlichungsnummer:
**WO 92/03011 (20.02.1992 Gazette 1992/05)**

(54) **VERFAHREN EINER NICHTLINEAREN FARBKORREKTUR n-TER ORDNUNG EINES MEHRFARBENSCANNERS ZUR AUSGABE AUF EINEM FARBDRUCKER**

PROCESS FOR nTH-ORDER NON-LINEAR COLOUR CORRECTION IN A MULTI-COLOUR SCANNER FOR OUTPUT ON A COLOUR PRINTER

PROCEDE DE CORRECTION DE COULEURS NON-LINEAIRE D'ORDRE n D'UN SCANNER POLYCHROME POUR LA SORTIE SUR UNE IMPRIMANTE COULEUR

(84) Benannte Vertragsstaaten:
**DE FR GB**

(30) Priorität: **30.07.1990 EP 90114622**

(43) Veröffentlichungstag der Anmeldung:
**19.05.1993 Patentblatt 1993/20**

(73) Patentinhaber: **EASTMAN KODAK COMPANY Rochester, New York 14650 (US)**

(72) Erfinder:
• WILD, Jörg
  D-8028 Taufkirchen (DE)
• PETSCHIK, Benno
  D-8011 Poing (DE)
• SCHERDEL, Stefan
  D-8000 München 70 (DE)

(74) Vertreter: **Pohle, Reinhard, Dipl.-Phys. et al c/o KODAK AKTIENGESELLSCHAFT Patentabteilung Hedelfinger Str. 54-60 70327 Stuttgart (DE)**

(56) Entgegenhaltungen:
**DE-A- 3 636 702**

• **Sid International Symposium Digest of Technical Papers, vol. XIX, May 1988, (Anaheim, California, US), Haruo Fukuda et al.: "Color Reproduction System for Thermal-Sublimation Dye-Transfer Printing Method", Seiten 194-197, siehe Seite 194**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft ein Verfahren zur Farbkorrektur bei der Wiedergabe von mittels Farbscanner abgetasteten Vorlagen durch einen Mehrfarbendrucker gemäß dem Oberbegriff des Patentanspruches 1.

Bei der Aufbereitung der Daten eines Mehrfarbenscanners zur Ausgabe auf einem Farbdrucker muß eine Farbkorrektur durchgeführt werden, damit die Wiedergabe der Farben in der richtigen Helligkeit, Sättigung und dem richtigen Farbton erfolgt.

Mit Hilfe dieser drei Merkmale läßt sich jede einzelne Farbe eindeutig beschreiben (Dreidimensionalität der Farben). Den unbunten Farben (Weiß, Grau, Schwarz) fehlt der Farbton, der Merkmal aller bunten Farben ist; das mehr oder weniger starke Hervortreten des Farbtons in einer bunten Farbe bestimmt die Sättigung. Jeder Farbe kommt darüber hinaus eine Helligkeit zu. Das System der DIN-Farbenkarte (DIN 6164) benutzt deshalb zur Kennzeichnung der Farben die drei Merkmale Farbton (T), Sättigungsstufe (S) und Dunkelstufe (D). Hierbei liegen die Farben gleichen Farbtons auf geraden Linien durch den Unbuntpunkt. Farben verschiedenen Farbtons, aber gleicher Sättigungsstufe sind durch Sättigungslinien verbunden, so daß durch Farbton und Sättigungsstufe die Farbart und damit der Farbort in der Normfarbtafel festgelegt ist. Die Helligkeitskennzeichnung erfolgt durch die Dunkelstufe. Dem idealen Weiß ist die Dunkelstufe D=0, dem idealen Schwarz D=10 zugeordnet.

Liegt der Wellenlängenbereich des Lichtes zwischen 435 nm und 495 nm, so empfindet der Mensch dies als Blau, zwischen 495 nm und 570 nm als Grün und zwischen 630 nm und 770 nm als Rot.

Tritt gleichzeitig rotes und blaues Licht auf, so entsteht der Eindruck von Magenta, bei grünem und blauem Licht von Cyan und bei gleichzeitigem Auftreten von grünem und rotem Licht der Eindruck von Gelb.

Wird Cyan, Magenta oder Gelb (Yellow) dadurch erzeugt, daß zwei separate Lichtströme verschiedener Farbe vereinigt werden, so nennt man diesen Vorgang der Mischung "additive Farbmischung". Sind Photonen aus allen drei Bereichen vorhanden, so ergibt die Mischung weißes Licht, da alle Wellenlängen auftreten.

Cyan kann beispielsweise aber auch dadurch erzeugt werden, daß aus weißem Licht mittels Filter der Rotanteil herausgefiltert wird. Diese Mischung wird als "subtraktive Farbmischung" bezeichnet; streng genommen ist dieser Ausdruck irreführend, da zwischen den Transmissionen hintereinander angeordneter Filter ein multiplikativer Zusammenhang besteht. Die Transmission $\tau$ ist dabei ein Maß dafür, welcher Prozentsatz der Intensität des ankommenden Lichtes den Filter passiert. Sie ist eine Funktion der Wellenlänge. Für Grundfarben mit idealen Filtern (Optimalfarben) hat die Transmission die Werte 0% oder 100%.

Während die Farben Rot, Grün und Blau die Grundfarben der additiven Farbmischung sind, werden Cyan, Magenta und Gelb als Grundfarben der subtraktiven Farbmischung bezeichnet. Ein Anwendungsbeispiel der additiven Farbmischung ist das Farbfernsehen. Die subtraktive Farbmischung kommt beim Tintendruck und auf dem Gebiet der Farbfotographie zum Einsatz.

Bei den für Tintenstrahldrucker verwendeten Farben handelt es sich um Tinten, deren Verhalten der Transmissionen weit von denen der idealen Farben entfernt ist. So läßt z.B. Cyan-Tinte im Rotbereich Photonen passieren, obwohl sie für diese undurchlässig sein sollte. Andererseits absorbiert die Tinte sowohl im Grün- als auch im Blaubereich Licht, obwohl sie hier transparent sein sollte.

Werden die Transmissionen jeweils über die Bereiche Rot, Grün und Blau gemittelt, wie es z.B. im einem Farbscanner oder im Auge eines Beobachters geschieht, so ergeben sich für die spektrale Verteilung der Transmissionen folgende Konsequenzen:

Bei der Abtastung einer mit einer reinen, realen Drucktinte bedruckten Fläche liefert keiner der drei Farbkanäle des Scanners wegen der Nebendichten den idealen Maximalwert 1. Werden aus diesen Werten die mit Cyan, Magenta und Yellow zu bedruckenden Flächen nach der Gleichung

$$
\begin{aligned}
\text{Cyan} &= 1 - \text{Rot} \\
\text{Magenta} &= 1 - \text{Grün} \qquad\qquad (1)\\
\text{Yellow} &= 1 - \text{Blau}
\end{aligned}
$$

berechnet, so ergeben sich immer von Null verschiedene Werte. Das bedeutet, daß immer alle drei Tinten zum Druck verwendet werden, obwohl die abgetastete Vorlage mit nur einer gedruckt wird. Durch dieses Verhalten erhält das gedruckte Bild einen Schwarzton und es können keine leuchtenden Farben auftreten.

Da die Hauptdichten bei realen Farben nicht unendlich groß sind, können die Scannerwerte nicht den Wert Null annehmen. Die mit diesen Werten berechneten Cyan-, Magenta- und Yellowflächen erreichen deshalb auch nicht den Maximalwert, was zur Folge hat, daß reine Farben nicht mit maximal möglicher Sättigung gedruckt werden.

Neben der Darstellung der Farben durch die Transmissionen kann der Farbraum auch als Würfel dargestellt werden.

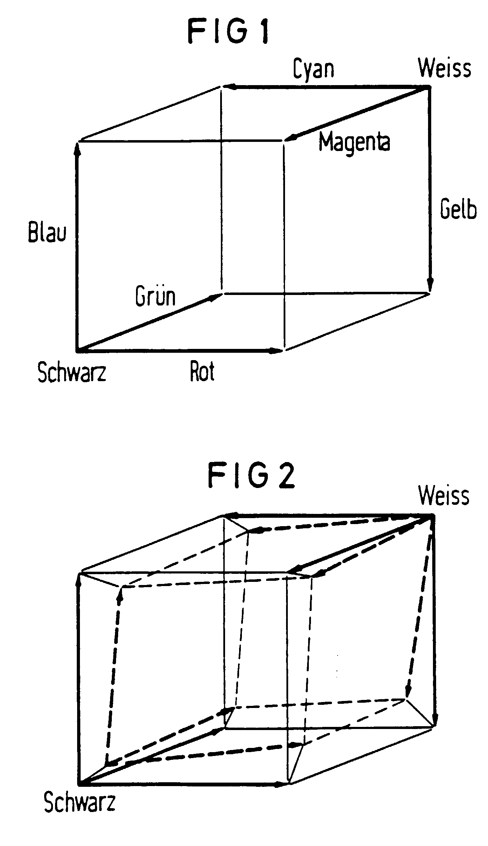

Trägt man auf die Einheitslänge normierte Helligkeitswerte für Rot, Grün und Blau an den Basisvektoren eines orthogonalen dreidimensionalen Koordinatensystems auf, so spannen sie einen Würfel auf. Im Ursprung liegt der Schwarzpunkt, diametral gegenüber der Weißpunkt. Zum gleichen Farbwürfel gelangt man, wenn man den Weißpunkt als Ursprung wählt und die normierten Cyan-, Magenta- und Yellowwerte auf den entgegengesetzt parallelen Basisvektoren aufträgt (Fig. 1).

Jede Farbe kann nun durch ihre drei Koordinaten in einem der Bezugssysteme beschrieben werden. Die Koordinaten vom Rot-Grün-Blau-Koordinatensystem lassen sich mit Hilfe der Gleichung (1) in das Cyan-Magenta-Yellow-Koordinatensystem umrechnen. Zur Beschreibung jeder Farbe sind somit drei unabhängige Koordinaten ausreichend. Allerdings sind die Koordinatensysteme, in denen die Farben beschrieben werden, bei verschiedenen Geräten nicht einheitlich, da sich zum Beispiel bei Scanner und Farbdrucker sowohl die Richtungen der Basisvektoren, als auch die Teilungen der Koordinatenachsen sehr stark unterscheiden können. Es muß folglich eine Umrechnung der Koordinaten erfolgen, wenn vom Bezugssystem eines Gerätes zu dem eines anderen übergegangen werden soll. Ein Beispiel, wie sich die Koordinatensysteme unterscheiden können, ist in Figur 2 dargestellt. Es handelt sich hier um eine Verschiebung, eine Verdrehung und eine Stauchung des zweiten Systems bezüglich des ersten.

Wie bereits angedeutet, müssen die Helligkeitswerte des Rot-, Grün- und Blaukanals des Farbscanners in die mit Cyan, Magenta und Yellow zu druckenden Flächen umgerechnet werden. Dazu kann aber nicht die einfache Gleichung (1) verwendet werden, da sie nur für ideale Verhältnisse gilt, die aber in der Praxis nicht vorhanden sind.

Im wesentlichen sind folgende Gründe dafür verantwortlich, daß im Sinne einer guten Bildwiedergabe eine kompliziertere Transformationsvorschrift verwendet werden muß.

Wie eingangs erwähnt, sind die Drucktinten durchlässig für Wellenlängen, in denen sie sperren sollten und absorbieren Licht in Bereichen, in denen sie transparent sein sollten. Dies hat zur Folge, daß durch subtraktive Mischung dieser Tinten nicht der ganze Farbraum "abgedeckt" werden kann, da sie in Reinheit und Sättigung nicht den Eigenschaften der idealen Farben entsprechen. Die Farben des Farbwürfels, die mit realen Farben erreicht werden können, liegen innerhalb des Farbwürfels der idealen Farben. Die Dichtewerte dieser Tinten sind aber auch kleiner als die in der Drucktechnik verwendeten Druckfarben. Folglich ist der Farbraum, der mit den Tinten erreicht werden kann, kleiner, als der, der mit Druckfarben abgedeckt werden kann. Wird diese Tatsache nicht berücksichtigt, so kommt es bei hohen Dichten an den Rändern des Farbraumes zu Informationsverlusten.

Da sich die Transmissionen mehrerer hintereinander angeordneter Filter, -die farbigen Tintenschichten wirken beim Tintendruck als Farbfilter-, multiplizieren, besteht bezüglich der Transmissionen der Farben kein linearer Zusammenhang. Sollten die negativen Effekte, die durch Fehler in den Dichten verursacht werden, wie z.B. eine Verschwärzlichung der Farben und nicht Erreichen der maximalen Sättigung, korrigiert werden, so reicht eine lineare Korrektur der Helligkeiten nicht mehr aus.

Außerdem sind die Basisvektoren des Scannerbezugssystems nicht notwendigerweise entgegengesetzt zu den Basisvektoren des Druckerbezugssystems. Auch die Länge der Vektoren kann unterschiedlich sein. Dies ist darauf zurückzuführen, daß die Farben der Filter im Scanner nicht komplementär zu den Druckfarben sind und sich auch in den Dichten unterscheiden können. Dies hat zur Folge, daß die Koordinatensysteme zueinander verschoben sind, da der Schwarzpunkt des Druckerkoordinatensystems, der durch die schwarze Tinte festgelegt ist, nicht mit dem Schwarzpunkt des Scannerkoordinatensystems zusammenfällt. Außerdem sind deswegen die Koordinatensysteme nur durch nichtlineare Funktionen ineinander überführbar.

Sowohl die Werte des Scanners als auch die Tinten des Tintendruckers zeigen nichtlineares Verhalten.

Im Scanner wird die Anzahl der Photonen, die von der abzutastenden Vorlage zurückkommen, durch Fotodioden in ein elektrisches Signal umgewandelt. Da die größte Empfindlichkeit der Fotoelemente im allgemeinen im Rotbereich liegt, ergeben sich bei gleicher Helligkeit unterschiedliche Fotoströme für rotes, grünes und blaues Licht. Besonders gering ist der Strom bei Blau, da hier die geringste Empfindlichkeit des Fotoelementes liegt. Die Fotoströme der drei Farbkanäle werden anschließend so verstärkt, daß bei einer weißen Vorlage die Ströme gleich groß sind. Wenn der Blaukanal am meisten verstärkt werden muß, wirken sich bei ihm Störungen, die z.B. durch UV-Anteile oder ungleiche Eigenschaften der Fotoelemente verursacht werden, am größten aus. Wieweit die digitalisierten Ausgangswerte proportional zu den Helligkeiten sind, hängt davon ab, wie gut die verwendeten Kennlinien des Scanners die Nichtlinearität der Lichtquelle, der Farbfilter, der Fotoelemente, des Verstärkers und des AD-Wandlers ausgleichen. Je nach der Güte des Scanners ist also mit nichtlinearem Verhalten der Scannerwerte zu rechnen.

Ebenso zeigen auch die verwendeten Drucktinten nichtlineares Verhalten, da sich einerseits die Dichte beim übereinanderdrucken zweier gleichfarbiger Tintenschichten nicht verdoppelt, andererseits bei manchen Tinten die Druckreihenfolge für die sich ergebende Farbe von Einfluß ist, wenn Mischfarben erster und zweiter Drdnung gedruckt werden.

Auch beim Druck der Farbflächen entstehen Nichtlinearitäten, da Tintenstrahldrucker keine rechteckigen Pixel drucken. Um eine Fläche geschlossen mit runden Punkten bedecken zu können, müssen die Punkte so groß sein, daß sie sich überlappen. Druckt man nun mit dieser Punktgröße nicht flächendeckende Raster, so ist die tatsächlich mit Farbe bedeckte Fläche wegen der Punktüberlappung auch von der Anordnung der Rasterpunkte abhängig und nicht proportional zu der Anzahl der gedruckten Punkte.

Aus den oben angeführten Gründen genügt es also nicht, die Koordinatentransformation von einem Bezugssystem in das andere mit Hilfe der Gleichung (1) für ideale Farben vorzunehmen. Es muß vielmehr eine komplexe Farbkorrektur durchgeführt werden, wenn das Druckergebnis in der Farbwiedergabe annähernd dem Original nahekommen soll.

Eine Möglichkeit der Farbkorrektur besteht darin, daß zu jedem Zahlentripel, das der Scanner liefert, in einer sog. LookUp-Tabelle das zugehörige Zahlentripel gespeichert ist, das die Flächenanteile der zu druckenden Farben repräsentiert. Werte, die nicht in der Tabelle enthalten sind, werden durch Interpolation oder Extrapolation gewonnen. Es ist nicht notwendig zu wissen, welcher mathematische oder physikalische Zusammenhang zwischen Eingangs- und Ausgangsgröße besteht. Der Vorteil dieses Verfahrens ist die hohe Geschwindigkeit beim Kopiervorgang, da nur auf den Inhalt dreier Speicherzellen zugegriffen werden muß und die Möglichkeit einer sehr genauen Korrektur.

Diesem Sachverhalt stehen aber auch zwei entscheidende Nachteile gegenüber:

Zum einen ist der benötigte Speicherplatz relativ groß. Bei 64 Helligkeitsstufen je Farbkanal werden 64 x 64 x 64 x 3, also ungefähr 790 KByte benötigt. Zum anderen müssen diese LookUp-Tabellen aber zunächst einmal erstellt werden. Gelingt es, auf einer Eichkarte 64 x 64 Eichfarben darzu stellen, was bedeutet, daß für jede Farbfläche ein Raum von etwa 3 mm x 3 mm zur Verfügung steht, so werden immerhin noch 64 Eichkarten benötigt, die zu Drucken bzw. zu Scannen sind.

Werden die Tabellenwerte durch Interpolation aus wenigen Stützstellen gewonnen, so ist die Güte der Werte von dem verwendeten Verfahren abhängig. Beispiele für eine Korrekturyrtspeicheranordnung sind in den DE-A-30 15 337, DE-A-26 37 055 und DE-B-26 21 008 beschrieben.

Außerdem werden die dabei benötigten Korrekturparameter und Eichwerte durch empirische Verfahren gewonnen.

In der Literaturstelle T. Celio: "Die Technik der Farbmaskierung im Fernsehen, in der Photographie und im graphischen Gewerbe", AGEN Mitteilungen, 9 (1969), 5. 64-71 wird ein Verfahren zur Farbkorrektur vorgeschlagen, bei dem eine lineare Korrektur der Dichten durchgeführt wird. Die Scannerwerte für Rot, Grün und Blau werden durch eine logarithmusähnliche Kennlinie in die Dichten für Cyan, Magenta und Yellow überführt. Durch eine Matrizenmultiplikation mit einer 3 x 3-Matrix werden nun die Dichten linear korrigiert. Der Übergang von den Helligkeiten zu den Dichten bietet sich an, da dadurch aus dem multiplikativen Zusammenhang der Transmissionen, wie er sich durch hintereinander liegende Filterschichten ergibt, ein additiver Zusammenhang wird. Anschließend müssen die Dichten in die mit einer Farbe zu bedruckenden Flächenanteile umgerechnet werden. Diese Umrechnung erfolgt wiederum durch eine Kennlinie, die auch gleich die Nichtlinearitäten des gedruckten Rasters erfassen soll. Die Bestimmung der Kennlinien und der 9 Parameter für die Korrektur erfolgt empirisch. Dabei können beliebig viele Farben zur Beurteilung der Güte der Einstellung herangezogen werden, wobei automatisch die Farben zuerst korrigiert werden, deren Fehler am meisten ins Auge fällt. Die Qualität des Ergebnisses ist sehr stark von der Geduld und den Fähigkeiten derjenigen Person abhängig, die den Abgleich vornimmt. Da der Einfluß der Rasterung in der Ausgangskennlinie berücksichtigt wird, ergibt sich für sie eine annähernd lineare Funktion.

Aus der DE-A-35 02 403 ist ein Verfahren zur Korrektur des Farbeingangssignals beim Mehrfarbendruck in Abhängigkeit vom spektralen Fehlverhalten der Druckfarben bekannt. Zur Erzielung einer besseren Widergabequalität bei Reproduktionsverfahren vermittelt dieses Verfahren mit der maximal möglichen Berücksichtigung der spektralen Fehler der Druckfarben diejenigen Druckparameter, welche beim Druck ein vorgegebenes Druckergebnis liefern. Hierzu werden nach einmaliger Ermittlung der Remissionsanteile der verwendeten Körperfarben im spektralen Blau-, Grün- und Rotbereich die notwendigen Farbzumessungen für die jweiligen Körperfarben unter wechselseitiger Berücksichtigung der spektralen Farbfehler nach einem vorgegebenen Gleichungssystem errechnet und anschließend eine Ergebnisselektion durchgeführt.

Aufgabe der Erfindung ist es, ein Farbkorrekturverfahren zur optimalen Anpassung von Farbscanner und Farbdruckeinrichtung zur Farbreproduktion anzugeben, das automatisierbar ist und eine gute Wiedergabequalität sicherstellt.

Diese Aufgabe wird gemäß den Merkmalen des Patentanspruchs 1 gelöst. Vorteilhafte Weiterbildungen der Erfindung sind in den Unteransprüchen gekennzeichnet.

Durch Aufstellen einer nichtlinearen Farbkorrektur n-ter Ordnung, die automatisch durch ein geschlossenes Verfahren berechnet wird und dessen erforderlicher Parametersatz durch das Scannen eines mit dem Wiedergabegerät gedruckten Eichkartensatzes automatisch optimiert bestimmt wird, ergibt sich eine optimale Wiedergabe der Farben in der richtigen Helligkeit, Sättigung und dem richtigen Farbton.

Das erfindungsgemäße Verfahren wird nachstehend anhand eines Ausführungsbeispiels erläutert. In der zugehörigen Zeichnung zeigen

Figur 1 einen Farbwürfel, der von den auf die Einheitslänge normierten Helligkeitswerte für Rot, Grün und Blau an den Basisvektoren aufgespannt wird,

Figur 2 die Darstellung eines Farbwürfels, bei dem sich die Koordinatensysteme von Farbscanner und Farbdrucker unterscheiden,

Figur 3 ein Prinzipbild zur Aufbereitung der Daten eines Mehrfarbscanners zur Ausgabe auf einem Farbdrucker,

Figur 4 einen Farbwürfel mit 27 Farbarten.

In Figur 1 sind die auf Einheitslänge normierten Helligkeitswerte für die Farben Rot, Grün und Blau an den Basisvektoren eines sog. Farbwürfels aufgetragen. Im Ursprung liegt der Schwarzpunkt, diametral gegenüber der Weißpunkt. Behält man den Weißpunkt als Ursprung, so gelangt man zum gleichen Farbwürfel, wenn man die normierten Cyan-, Magenta- und Yellowwerte auf den entgegengesetzten parallelen Basisvektoren aufträgt. Anhand der Figur 1 läßt sich erkennen, daß die Koordinaten vom Rot-, Grün-Blaukoordinatensystem in das Cyan-, Magenta-, Yellowsystem nach der Formel

$$Cyan = 1 - Rot$$

$$Magenta = 1 - Grün$$

$$Yellow = 1 - Blau$$

umgerechnet werden können.

Da die Koordinatensysteme, in denen die Farben beschrieben werden, bei verschiedenen Geräten nicht einheitlich sind, weil sich z.B. bei Farbscannern, Farbdruckern sowohl die Richtungen der Basisvektoren als auch die Teilungen der Koordinatenachsen sehr stark unterscheiden können, muß folglich eine Umrechnung der Koordinaten erfolgen, wenn vom Bezugssystem eines Gerätes zu dem eines anderen übergegangen werden soll. In Figur 2 ist dargestellt, wie sich die Koordinatensysteme von Farbscanner und Farbdrucker unterscheiden können. Das zweite Koordinatensystem ist bezüglich des ersten verschoben, verdreht und gestaucht. Die Basisvektoren des Scannersystems sind dabei mit ausgezogenen Linien gekennzeichnet, die Basisvektoren des Druckersystems mit gestrichelten Linien.

Da das Verfahren zur Bestimmung der Korrekturparameter automatisch, d.h. unabhängig von der Person abläuft, die den Abgleich vornimmt, ist es notwendig, Meßwerte aufzunehmen, anhand derer die Parameter bestimmt werden. Hierzu wird der später verwendete Scanner als "Farbmeßgerät" eingesetzt, da verschiedene Farbscanner bei der gleichen Vorlage verschiedene Werte liefern können. Diese Werte können je nach Güte des Scanners näher oder weiter von den Werten eines geeichten Meßgerätes entfernt liegen. Als Vorlage für den Farbscanner können geeichte Farbkarten, z.B. Farbkarten nach DIN 6164 oder selbst angefertigte Farbkarten benutzt werden. Verwendet man den Drucker, der später auch für den Kopierer eingesetzt werden soll, zum Drucken der Karten, so ergeben sich zwei Vorteile gegenüber geeichten Farbkarten.

Zum einen ist die Abstimmung der Farbkorrektur auf die tatsächlich verwendeten Drucktinten gegeben. Dies ist von Bedeutung, da die Dichten der Druckfarben wesentlich höher sind als die Dichten der Tinten. Würde man dies nicht berücksichtigen, so wird die Kopie heller als das Original, obwohl ein Großteil der Farben der Vorlage in der richtigen Dichte wiedergegeben werden könnte. Dies hat ihre Ursache darin, daß die Korrektur auf die höheren Dichten der Druckfarbe abgeglichen ist. Außerdem weiß man bei selbst angefertigten Vorlagen im Gegensatz zu geeichten Vorlagen immer genau, welche Daten an den Farbdrucker zu übertragen sind, um ein bestimmtes Ergebnis zu erhalten.

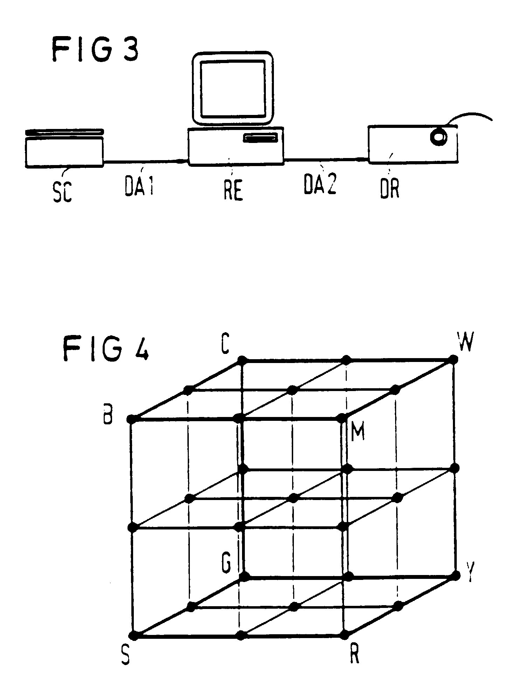

In Figur 3 ist in Prinzipdarstellung das Zusammenwirken der einzelnen Funktionseinheiten zur Reproduktion von Farbvorlagen gezeigt. Mit einem Mehrfarbendrucker DR werden die selbst angefertigten Farbkarten (Farbtestbilder) erstellt und anschließend diese gedruckte Eichkarte von einem Farbscanner SC abgetastet, der in der späteren Anwendung verwandt wird. Die vom Scanner SC erhaltenen Daten DA 1 werden einem Rechner RE, z.B. einem Personalcomputer zugeführt, der die für eine gute Bildwiedergabe auf dem Drucker DR benötigte Farbkorrektur automatisch durchführt. Die korrigierten Daten DA2 werden anschließend dem Mehrfarbdrucker DR zugeführt, der die Vorlage in der richtigen Helligkeit, Sättigung und dem richtigen Farbton wiedergibt.

Zur Beschreibung der Farbkorrektur wird eine Reihenentwicklung angesetzt. Die geforderte Genauigkeit bestimmt, nach welchen Termen der Reihe abgebrochen werden kann. Ein weiteres Abbruchkriterium ist die Leistung des Rechners. Die beim Kopiervorgang zur Verfügung stehende Zeit begrenzt einerseits die Anzahl der Rechenoperationen und andererseits bestimmt die Rechengenauigkeit des Rechners, bis zu welcher Ordnung maximal sinnvoll gerechnet werden kann.

Da es sich bei der Farbkorrektur um eine nichtperiodische Funktion handelt, wird für die Reihenentwicklung die Taylorreihe im dreidimensionalen Raum benutzt. Anhand eines Beispiels, bei dem die Reihe nach den quadratischen Termen abgebrochen wird, soll dieses Verfahren erläutert werden. Eine Ausweitung auf Glieder höherer Ordnung ist mit diesem Verfahren aber uneingeschränkt durchführbar.

Ausgehend von der allgemeinen Form einer dreidimensionalen Taylorreihe und nach Abbrechen der Reihenentwicklung nach den quadratischen Thermen und Umformungen erhält man folgende Gleichung

$$f(x,y,z) = a_1 + a_2 x + a_3 y + a_4 z + a_5 x^2 + a_6 y^2 + a_7 z^2 + a_8 xy + a_9 xz + a_{10} yz$$

Diese Gleichung ist Grundlage für das folgende Korrekturverfahren. Überträgt man diese Gleichung auf alle drei Farbkanäle, so ergibt sich folgende Form der Gleichung:

$$
\begin{pmatrix} R^* \\ G^* \\ B^* \end{pmatrix} = \begin{pmatrix} a_1 & a_2 & a_3 & a_4 & a_5 & a_6 & a_7 & a_8 & a_9 & a_{10} \\ a_{11} & a_{12} & a_{13} & a_{14} & a_{15} & a_{16} & a_{17} & a_{18} & a_{19} & a_{20} \\ a_{21} & a_{22} & a_{23} & a_{24} & a_{25} & a_{26} & a_{27} & a_{28} & a_{29} & a_{30} \end{pmatrix} \cdot \begin{pmatrix} 1 \\ R \\ G \\ B \\ R^2 \\ G^2 \\ B^2 \\ RG \\ RB \\ GB \end{pmatrix} \quad (2)
$$

wobei mit

R, G, B die Helligkeiten für die Farben Rot, Grün und Blau, mit

R*, G*, B* die korrigierten Helligkeiten für Rot, Grün und Blau und mit

$a_i$ die Elemente der sog. Korrekturmatrix bezeichnet sind.

Man erhält also aus den unkorrigierten Rot-, Grün- und Blauwerten die korrigierten Rot-, Grün- und Blauwerte durch Matritzenmultiplikation.

Die für eine Korrektur zweiter Ordnung nötigen 10 x 3 Kenngrößen der Matrix (Elemente $a_1$ bis $a_{30}$) werden dadurch gewonnen, daß zuerst auf dem Drucker, der später auch zur Wiedergabe verwendet werden soll, eine Eichkarte mit geeigneten Eichfarben erstellt wird. Geeignete Eichfarben sind Punkte auf den Kanten, Flächenmittelpunkte und Punkte auf der Graugeraden des Farbwürfels. Durch diese Eichpunkte ist der Farbraum möglichst gleichmäßig abzudecken. Die gedruckte Eichkarte wird anschließend mit dem Scanner abgetastet, der in einer späteren Anwendung verwandt wird. Die so gewonnenen Meßwerte der Eichfarben werden zur Berechnung der gesuchten Kenngrößen eingesetzt. Zur exakten Bestimmung der 30 Unbekannten $a_i$ einer nichtlinearen Funktion zweiter Ordnung werden 10 Eichfarben benötigt. Um einen optimalen Wertesatz für die Korrekturmatrix zu erhalten, müssen aber wesentlich mehr Eichfarben berücksichtigt werden. Für eine quadratische Funktion haben sich die 27 Farborte gemäß Figur 5 als günstig erwiesen.

In Figur 4 ist als Farbraum wiederum der Farbwürfel dargestellt, wie er bereits in Figur 1 erläutert wurde. Mit S, B, G, R sind dabei wiederum die Farben Schwarz, Blau, Grün und Rot bezeichnet, mit C, W, M, Y die Farben Cyan, Weiß, Magenta und Yellow. Zusätzlich zu den Eckpunkten des Farbwürfels sind weitere Punkte in Form von schwarzen Kreisen eingezeichnet, die jeweils in der Mitte der Verbindungslinien von Kanten des Würfels und in der Mitte von Diagonalen eingezeichnet sind, so daß sich 27 Farborte ergeben. Dabei ergibt sich eine Überbestimmtheit des Gleichungssystems zur Berechnung der Matrixelemente. Eine Optimierung der Elemente der Korrekturmatrix erfolgt so, daß der Fehler der Eichfarben minimal wird. Als Maß für den Fehler kann z.B. der quadratische Abstand des korrigierten Farbortes im Farbraum zum idealen Farbraum verwendet werden. Es wird also zur Beurteilung der Güte der Parameter ein Summenfehler berechnet, der als mittlerer quadratischer Abstand der korrigierten Meßwerte von den Sollwerten im Farbraum definiert ist. Dafür gilt folgende Beziehung:

$$
F = \sqrt{ \sum_{pkt=1}^{N} \left[ \frac{(\Delta C_{pkt})^2 + (\Delta M_{pkt})^2 + (\Delta Y_{pkt})^2}{N} \right] } \quad (3)
$$

mit:

$\Delta C_{pkt}, \Delta M_{pkt}, \Delta Y_{pkt}$ :     Abweichungen der korrigierten Meßwerte von den Sollwerten

N :                                    Anzahl der Eichpunkte.

Die Minimierung des Fehlers F wird durch Variation der Parameter erreicht. Dazu wird, ausgehend von Startwerten, jeder Parameter pro Iterationsschritt um eine Schrittweite in die richtige Richtung verändert, so lange, bis die Abweichung der berechneten Werte von den Sollwerten unter eine vorher definierte Schranke fällt oder eine festgesetzte Anzahl an Iterationen erreicht ist. Die Schrittweiten sind für jeden Parameter unterschiedlich und variabel.

Konnte mit der aktuellen Schrittweite eine Verbesserung erreicht werden, so wird sie vergrößert, andernfalls verkleinert. Durch diese Definition wird sichergestellt, daß große Fehler bevorzug korrigiert werden und daß Fehler sich nicht gegenseitig ausgleichen können.

Der Vorteil dieses Verfahrens besteht darin, daß der Abgleich auf einen für den jeweiligen Farbdrucker maximalen Bereich erfolgt, und daß die Korrekturparameter nicht mit empirischen Verfahren, sondern mit schematischen Regeln automatisch gefunden werden.

Das erfindungsgemäße Verfahren der Farbkorrektur n-ter Ordnung wurde anhand eines Mehrfarbenscanners und einer Mehrfarbendruckeinrichtung erläutert. Unter Mehrfarbenscanner im Sinne der Erfindung ist aber auch eine Kombination von Farb-Video-Kamera in Verbindung mit einer Digitalisiereinrichtung zu verstehen. Auch hier werden Rot-Grün-Blau-Signale geliefert und die angegebene Farbkorrektur kann anschließend für das gesamte System Farbkamera/Digitalisiereinrichtung/ Mehrfarbendrucker erfolgen.

**Patentansprüche**

1.  Verfahren zur Farbreproduktion mit einem Farbvorlagen abtastenden Farbscanner (SC) und einer die gescannten Vorlagen ausgebenden Mehrfarbendruckeinrichtung (DR), wobei zur Erzielung eines originalgetreuen Abbildes der Farbvorlage bezüglich der Wiedergabe der Farben in der richtigen Helligkeit, Sättigung und Farbton eine Farbkorrektur durchgeführt wird mit folgenden Verfahrensschritten :

    a) mit der Mehrfarbendruckeinrichtung (DR) wird eine im Sinne einer Eichkarte mit mehreren Eichfarben dienende Farbtestvorlage mit den Druckfarben Cyan (C), Magenta (M), Yellow (Y) und Schwarz gedruckt,
    b) die erstellte Farbtestvorlage wird mit dem zu verwendenden Scanner (SC) abgetastet,
    c) die so erhaltenen Meßwerte der Eichfarben werden zur Berechnung von gesuchten Kenngrößen einer Korrekturmatrix ($a_1$), deren Elemente Koeffizienten eines nichtlinearen Gleichungssystemes n-ter Ordnung sind, mit den Druckfarben (C,M,Y) der Farbtestvorlage verknüpft und auf minimalen Fehler der Eichfarben optimiert,
    d) die zu reproduzierende Farbvorlage wird mit dem Scanner (SC) abgetastet,
    e) die ermittelten Rot-Grün-Blauwerte (R.G.B) eines Abtastpunktes werden Elementen eines Vektors zugeordnet,
    f) die Cyan-, Magenta- udn Yellowwerte (C, M, Y) werden durch Matrizenmultiplikation des Vektors mit der Korrekturmatrix ermittelt.

2.  Verfahren nach Anspruch 1,
    dadurch gekennzeichnet,
    daß die Farbkorrektur mit Hilfe einer Taylorreihe im dreidimensionalen Raum derart durchgeführt wird, daß aus den gescannten Rot-Grün-Blauwerten (R, G, B) die Cyan-, Magenta- uiid Yellowwerte (C, M, Y) der Farbtestvorlage ermittelt werden.

3.  Verfahren nach Anspruch 1,
    dadurch gekennzeichnet,
    daß die Optimierung der Elemente der Korrekturmatrix ($a_i$) so erfolgt, daß für den Fehler der Eichfarben als Maß der quadratische Abstand (F) des korrigierten Farbortes im Farbraum zum idealen Farbort verwendet wird.

**Revendications**

1.  Procédé de reproduction en couleur à l'aide d'un analyseur couleur (SC) explorant des documents en couleur et d'un dispositif d'impression en couleur (DR) délivrant les documents analysés, selon lequel en vue de l'obtention d'une image fidèle à l'original du document couleur en ce qui concerne la restitution des couleurs selon la luminosité, la saturation et la teinte correctes, une correction de couleur est effectuée selon les étapes suivantes:

a) à l'aide du dispositif d'impression couleur (DR), est imprimé un document d'essai de couleur servant de carte d'étalonnage avec plusieurs couleurs d'étalonnage avec les couleurs d'impression Cyan (C), Magenta (M), Jaune (Y) et Noir,

b) le document d'essai de couleur établi est exploré à l'aide de l'analyseur (SC) à utiliser,

c) les valeurs de mesure ainsi obtenues des couleurs d'étalonnage sont combinées en vue du calcul de caractéristiques recherchées d'une matrice de correction ($a_i$), dont les éléments sont les coefficients d'un système d'équation non linéaire du n-ième ordre, avec les couleurs d'impression (C, M, Y) du document d'essai de couleur et optimalisées à des erreurs minimales des couleurs d'étalonnage,

d) le document couleur à reproduire est exploré à l'aide de l'analyseur (SC),

e) les valeurs rouge, vert, bleu (R, G, B) d'un point d'analyse détectées sont associées aux éléments d'un vecteur,

f) les valeurs Cyan, Magenta, et Jaune (C, M, Y) sont obtenues par multiplication matricielle du vecteur par la matrice de correction.

**2.** Procédé selon la revendication 1, caractérisé en ce que la correction de couleur est effectuée à l'aide d'une série de Taylor dans l'espace tridimensionnel de telle sorte qu'à partir des valeurs de rouge, de vert et de bleu analysées (R, G, B), les valeurs Cyan, Magenta et Jaune (C, M, Y) du document d'essai de couleur sont obtenues.

**3.** Procédé selon la revendication 1, caractérisé en ce que l'optimalisation des éléments de la matrice de correction ($a_i$) s'effectue de sorte que pour les défauts des valeurs d'échantillonnage est utilisé en tant que mesure, l'écart quadratique (F) du point de couleur corrigé dans l'espace de couleur en vue du point de couleur idéal.

## Claims

**1.** Method for color reproduction using a color scanner (SC) scanning color originals and a multi-color printing unit printing out said scanned originals, where in order to obtain a reproduction of the color original that is true to the latter with regard to color reproduction in the right brightness, saturation and tone a color correction is performed with the following process steps:

a) using said multi-color printing unit (DR) a color test original in the form of a calibration card having several calibration colors is printed with the printing inks cyan, (C), magenta (M), yellow (Y) and black,

b) said color test original prepared is scanned with the scanner (SC) to be used,

c) the measured values thereby obtained for the calibration colors are linked to the printing inks (C, M, Y) of said color test original and optimized for minimum errors of the calibration colors in order to calculate the required characteristic values of a correction matrix (a1) whose elements are coefficients of a non-linear equation system of the nth order,

d) the color original to be reproduced is scanned using said scanner (SC),

e) the red/green/blue values ascertained of a scanned point are allocated to elements of a vector,

f) the cyan, magenta and yellow values (C, M, Y) are ascertained by matrix multiplication of said vector with said correction matrix.

**2.** Method according to Claim 1, characterized in that the color correction with the aid of a Taylor's series in the three-dimensional sphere is performed such that said cyan, magenta and yellow values (C, M, Y) of said color test original are obtained from said scanned red/green/blue values (R, G, B).

**3.** Method according to Claim 1, characterized in that the optimization of the elements of the correction matrix (a1) is such that the square distance (F) of the corrected color location in the color area from the ideal color location is used as a dimension for the error of the calibration colors.

# FIG 1

Cyan    Weiss

Magenta

Blau    Gelb

Grün

Schwarz    Rot

# FIG 2

Weiss

Schwarz

FIG 3

SC    DA1    RE    DA2    DR

FIG 4

C    W
B    M
G
S    R    Y